# DEMANDE DE BREVET EUROPEEN

(11) **EP 3 342 472 A1**
(43) Date de publication de la demande: **04.07.2018**
(21) Numéro de dépôt: 18150080.2
(22) Date de dépôt: 02.01.2018
(51) Int. Cl.: B01D 36/00, B01D 27/04

(54) **FILTRE À GASOIL AVEC SÉPARATION D'EAU AMÉLIORÉE**

(30) Priorité: 03.01.2017 TN 2017000004
(71) Demandeur: Société Tunisienne des Filtres (MISFAT), 1124 Manouba (TN)
(72) Inventeur: GUERMAZI, Mohamed, 1124 MANOUBA (TN); ZAFFATI, Said, 1124 MANOUBA (TN); KHALLOUFI, Nejib, 1124 MANOUBA (TN)
(74) Mandataire: Cabinet Beau de Loménie

(57) **Abrégé**

Elément filtrant (1) pour la purification d'un liquide de moteur, comprenant
- un média filtrant (10) s'étendant autour d'un axe longitudinal (Z-Z), présentant une extrémité proximale (12) et une extrémité distale (13) et définissant un conduit interne (14) s'étendant selon l'axe longitudinal (Z-Z),
- une armature (2) comprenant un flasque proximal (20) monté sur l'extrémité proximale (12) du média filtrant (10), et un flasque distal (30) monté sur l'extrémité distale (13) du média filtrant (10) ;
ledit élément filtrant (1) étant caractérisé en ce qu'il comprend en outre une membrane hydrophobe (40) disposée autour de la périphérie externe dudit média filtrant (10), ladite membrane hydrophobe (40) s'étendant depuis le flasque proximal (20) jusqu'au flasque distal (30).

## Description

### DOMAINE DE L'INVENTION

La présente invention concerne le domaine des filtres, et plus particulièrement les éléments filtrants, par exemple pour gasoil, trouvant notamment une application dans le domaine automobile.

### ETAT DE LA TECHNIQUE ANTERIEURE

Les filtres à gasoil doivent répondre à une double problématique de filtration des impuretés présentes dans le gasoil, et également de retrait de l'eau qui a pu se mélanger avec le gasoil.

Une membrane hydrophobe est ainsi communément positionnée dans le filtre afin de séparer l'eau du gasoil, la filtration des impuretés étant quant à elle réalisée par un média filtrant.

Cependant, les différentes solutions proposées ne permettant pas d'obtenir des propriétés satisfaisantes sur ces deux aspects, la séparation de l'eau limitant les capacités du filtre.

Le document FR 2978061 présente ainsi un tel exemple de filtre comprenant une membrane hydrophobe disposée autour d'un conduit interne central du filtre et permettant une séparation et une accumulation de l'eau dans un réservoir dédié. La structure proposée dans ce document présente plusieurs désavantages, notamment en termes d'efficacité de séparation d'eau, auquel le présent exposé vise à répondre.

### PRESENTATION DE L'INVENTION

Le présent exposé concerne un élément filtrant pour la purification d'un liquide de moteur, comprenant un média filtrant s'étendant autour d'un axe longitudinal, présentant une extrémité proximale et une extrémité distale et définissant un conduit interne s'étendant selon l'axe longitudinal, une armature comprenant un flasque proximal monté sur l'extrémité proximale du média filtrant, et un flasque distal monté sur l'extrémité distale du média filtrant ; ledit élément filtrant étant caractérisé en ce qu'il comprend en outre une membrane hydrophobe disposée autour de la périphérie externe dudit média filtrant, ladite membrane hydrophobe s'étendant depuis le flasque proximal jusqu'au flasque distal.

Selon un exemple, ledit élément filtrant comprend en outre un support intermédiaire s'étendant autour de la périphérie externe dudit média filtrant depuis le flasque proximal jusqu'au flasque distal, ledit support intermédiaire formant un support pour la membrane hydrophobe.

Selon un exemple, le flasque distal est muni d'une pluralité d'éléments disjoints faisant saillie dudit flasque distal (30), adaptés pour venir en appui contre une surface d'un boitier de filtre tout en permettant un passage de fluide entre lesdits éléments disjoints. Ces éléments disjoints sont typiquement des nervures.

Selon un exemple, le flasque proximal présente un orifice central définissant un conduit de sortie du liquide filtré. L'élément filtrant comprend alors typiquement en outre un élément d'étanchéité disposé autour dudit orifice central.

Selon un exemple, le flasque distal présente une forme de disque plein.

Le présent exposé concerne également un filtre comprenant un boitier définissant un volume interne, un élément filtrant tel que défini précédemment, et est caractérisé en ce que ledit boitier comprend une base et un couvercle, la base présentant une surface d'appui intermédiaire délimitant un réservoir inférieur, l'élément filtrant étant disposé en appui sur la surface d'appui intermédiaire.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente une vue en perspective d'un élément filtrant selon un aspect de l'invention,
- la figure 2 est une vue en coupe d'un tel élément filtrant,
- la figure 3 est une vue éclatée d'un tel élément filtrant,
- la figure 4 représente un tel élément filtrant positionné dans un boitier de filtre.

Sur l'ensemble des figures, les éléments en commun sont repérés par des références numériques identiques.

### DESCRIPTION DETAILLEE D'EXEMPLES DE REALISATION

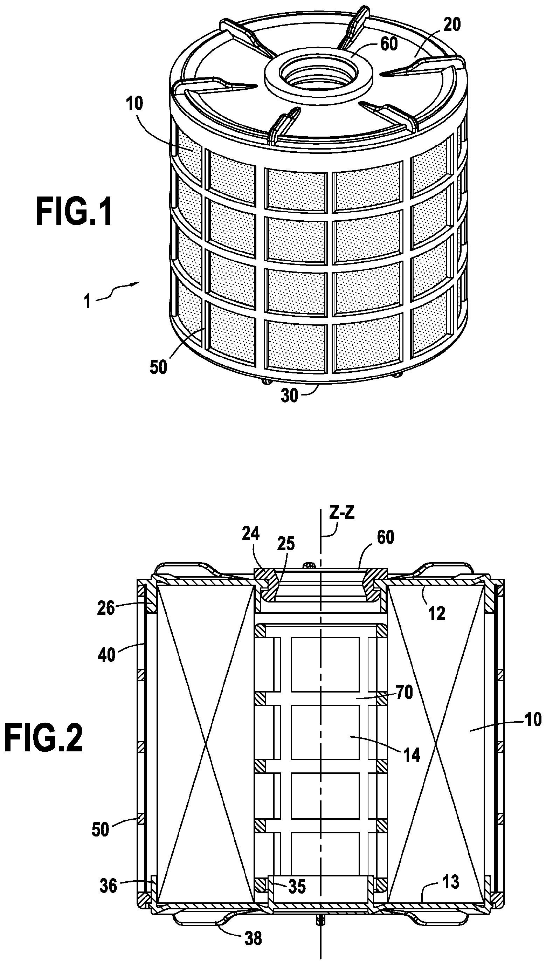

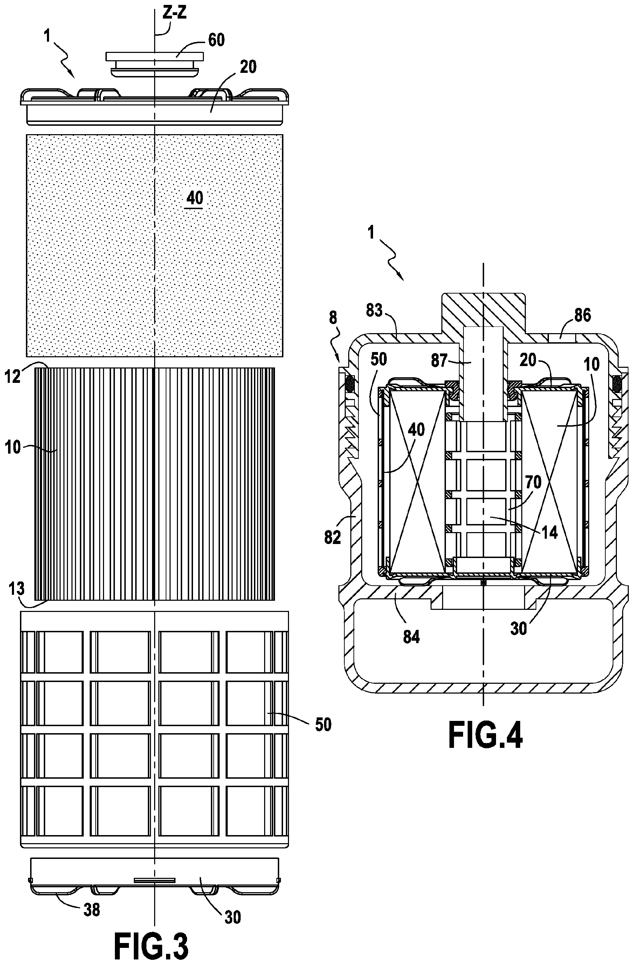

Les figures 1 à 3 présentent plusieurs vues d'un élément filtrant selon un aspect de l'invention, et la figure 4 présente un filtre comprenant un tel élément filtrant. Ces différentes figures sont décrites ci-après. L'élément filtrant 1 tel que présenté a une forme générale cylindrique de révolution. Il comprend un média filtrant 10 s'étendant selon un axe longitudinal Z-Z, et présentant une extrémité proximale 12 et une extrémité distale 13. Le média filtrant 10 définit un conduit interne 14 s'étendant selon l'axe longitudinal Z-Z.

Les dénominations « proximale » et « distale » sont arbitraires, et visent uniquement à permettre une distinction entre les différents éléments.

Le média filtrant 10 est adapté pour réaliser une séparation des impuretés présentes dans un fluide le traversant tel que du gasoil.

Le média filtrant 10 est interposé entre deux flasques ; un flasque proximal 20 et un flasque distal 30.

Le flasque proximal 20 est monté sur l'extrémité proximale 12 du média filtrant 10 et comprend typiquement un orifice central 24 s'étendant dans le prolongement du conduit interne 14 du média filtrant 10 selon l'axe longitudinal Z-Z. Un joint d'étanchéité 60 est alors typiquement disposé autour de cet orifice central 24, de manière à permettre de réaliser une liaison étanche avec un élément de boitier de filtre comme on le verra par la suite.

Le flasque distal 30 est monté sur l'extrémité distale 13 du média filtrant 10. Le flasque distal 30 est typiquement dépourvu d'orifice central, et présente donc une forme générale de disque, obturant de ce fait le conduit interne 14 du média filtrant 10 au niveau de son extrémité distale.

Le flasque proximal 20 typiquement présente une nervure circulaire interne 25 s'étendant vers le volume interne de l'élément filtrant 1 adaptée pour réaliser le centrage du média filtrant 10 par rapport au flasque proximal -20 et donc également par rapport au flasque distal 30.

En variante, comme représenté sur la figure 2, une cage interne 70 est disposée dans le conduit interne 14 du média filtrant 10. Le flasque distal 30 présente alors typiquement également une nervure circulaire interne 35 qui présente alors un diamètre légèrement inférieur au diamètre interne du média filtrant 10 de manière à permettre de positionner cette cage interne 70 entre la nervure circulaire interne 35 et le média filtrant 10. La cage interne 70 est un élément ajouré, permettant typiquement de contribuer à la rigidité de l'ensemble, ou pouvant former un moyen d'engagement de l'élément filtrant 1 à un boitier de filtre.

De même, le flasque proximal 20 et le flasque distal 30 présentent typiquement chacun une nervure circulaire externe respectivement 26 et 36 s'étendant vers le volume interne de l'élément filtrant 1, adaptées pour réaliser un centrage du média filtrant 10 par rapport au flasque proximal 20 et au flasque distal 30. Les nervures circulaires externes 26 et 36 s'étendent typiquement depuis les extrémités radiales externes du flasque proximal 20 et du flasque distal 30, et définissent chacune une section circulaire dont le diamètre est sensiblement égal au diamètre externe du média filtrant 10.

Une membrane hydrophobe 40 est disposée autour de la périphérie externe du média filtrant 10. La membrane hydrophobe s'étend depuis le flasque proximal 20 jusqu'au flasque distal 30, de sorte qu'un fluide doit traverser la membrane hydrophobe 40 avant de pouvoir traverser le média filtrant 10.

L'élément filtrant 1 tel que présenté comprend en outre un support intermédiaire 50, présentant ici une forme de cage ou de grillage cylindrique de révolution autour de l'axe Z-Z, et présentant donc une structure ajourée permettant à un fluide de le traverser. Ce support intermédiaire 50 est typiquement adapté pour être disposé entre le flasque proximal 20 et le flasque distal 30, typiquement de manière à s'étendre depuis le flasque proximal 20 jusqu'au flasque distal 30. Le support intermédiaire 50 est adapté pour s'étendre autour de la périphérie externe du média filtrant 10, de manière à former un support pour la membrane hydrophobe 40, assurant ainsi son maintien en position et contribuant à la rigidité de l'élément filtrant 1 dans son ensemble.

Comme on le voit sur la figure 4, l'élément filtrant 1 est adapté pour être positionné dans un boitier de filtre 8, l'ensemble formant ainsi un filtre. Dans l'exemple représenté, le boitier de filtre 8 comprend une portion inférieure ou base 82 et une portion supérieure ou couvercle 83 adaptées pour être engagées de manière à définir un volume interne dans lequel est disposé l'élément filtrant 1.

La base 82 comprend typiquement une surface d'appui intermédiaire 84 scindant le volume interne du boitier de filtre 8 en un premier volume adapté pour recevoir l'élément filtrant 1, et un second volume définissant un réservoir inférieur. La surface d'appui intermédiaire 84 présente un orifice assurant ainsi un passage entre le premier volume et le second volume ainsi définis.

Comme on le voit sur la figure 4, l'élément filtrant 1 est disposé en appui sur cette surface d'appui intermédiaire 84 via son flasque distal 30. Le flasque distal 30 comprend typiquement une pluralité de nervures disjointes 38 s'étendant depuis sa face externe et adaptés pour venir en appui contre la surface d'appui intermédiaire 84. Les nervures 38 étant disjointes, un passage de fluide demeure possible entre le flasque distal et la surface d'appui intermédiaire 84 ; la communication fluidique entre le premier volume et le second volume du boitier de filtre 8 est ainsi assurée. Les nervures disjointes 38 peuvent plus généralement prendre la forme de bossages, ou plus généralement d'éléments disjoints faisant saillie depuis la face externe du flasque distal 30, adaptés pour venir en appui contre une surface d'un boitier de filtre tout en permettant un passage de fluide entre lesdits éléments disjoints.

Les nervures 38 sont typiquement aménagées en portions de cercle autour de l'axe longitudinal Z-Z.

Le couvercle 83 du boitier de filtre 8 comprend typiquement un conduit central 87 destiné à être inséré dans l'orifice central 24 du flasque proximal 20.

En fonctionnement, du gasoil « sale » entre dans le boitier de filtre 8 via un conduit d'admission, ici un conduit 86 débouchant dans le couvercle 83.

Le fluide sale entre donc dans le boitier de filtre, puis traverse la membrane hydrophobe 40 qui sépare l'eau du gasoil sale, et le média filtrant 10 qui filtre les impuretés présentes dans le gasoil sale et permet donc d'obtenir du gasoil « propre ». Le gasoil propre ressort ensuite du filtre via le conduit interne 14 et le conduit central 87. Le sens de circulation du fluide est symbolisé par des flèches sur la figure 4.

On comprend donc que la séparation entre l'eau et le gasoil sale est réalisée en amont de l'étape de filtration du gasoil par le média filtrant 10.

L'eau ainsi séparée du gasoil sale demeure hors de l'élément filtrant 1, et ruisselle à l'extérieur de la membrane hydrophobe 40 dans le volume interne du boitier de filtre 8. Du fait de la densité supérieure de l'eau par rapport à celle du gasoil, l'eau va naturellement décanter et s'accumuler au fond du boitier de filtre 8 par gravité.

Dans l'exemple représenté, la présence d'un second volume dans le boitier de filtre 8 permet de définir un réservoir dans lequel l'eau ainsi séparée du gasoil va s'accumuler. Définir ainsi un second volume localisé en dessous de l'élément filtrant 1 permet d'éviter qu'une accumulation d'eau en partie inférieure du filtre ne dégrade les capacités de filtration de l'élément filtrant en diminuant la surface active de filtration. Un orifice de purge 90 est typiquement formé au fond de ce second volume du boitier de filtre 8, cet orifice de purge 90 étant obturé au moyen d'un bouchon 92 qui peut être ôté afin de purger le fluide présent dans le boitier de filtre 8.

Le système tel que proposé présente plusieurs avantages. En premier lieu, il permet de disposer d'une surface maximisée pour la membrane hydrophobe 40, ce qui permet ainsi de maximiser l'efficacité de séparation d'eau de l'élément filtrant 1, par exemple par rapport à un élément filtrant dans lequel la membrane hydrophobe serait disposée au niveau du conduit interne 14 du média filtrant 10.

Par ailleurs, réaliser la séparation eau/gasoil en amont du média filtrant 10 permet d'éviter que le média filtrant 10 soit au contact de l'eau, ce qui est avantageux dans la mesure où les média filtrant communément utilisés comprennent de la cellulose et sont donc sensibles à une exposition à l'eau. L'élément filtrant 1 tel que proposé permet ainsi d'améliorer la durée de vie du média filtrant 10, et donc de l'élément filtrant 1 dans son ensemble.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un dispositif sont transposables, seules ou en combinaison, à un procédé.

## Revendications

1. Elément filtrant (1) pour la purification d'un liquide de moteur, comprenant
- un média filtrant (10) s'étendant autour d'un axe longitudinal (Z-Z), présentant une extrémité proximale (12) et une extrémité distale (13) et définissant un conduit interne (14) s'étendant selon l'axe longitudinal (Z-Z),
- une armature (2) comprenant un flasque proximal (20) monté sur l'extrémité proximale (12) du média filtrant (10), et un flasque distal (30) monté sur l'extrémité distale (13) du média filtrant (10) ;
ledit élément filtrant (1) étant **caractérisé en ce qu'**il comprend en outre une membrane hydrophobe (40) disposée autour de la périphérie externe dudit média filtrant (10), ladite membrane hydrophobe (40) s'étendant depuis le flasque proximal (20) jusqu'au flasque distal (30).

2. Elément filtrant (1) selon la revendication 1, comprenant en outre un support intermédiaire (50) s'étendant autour de la périphérie externe dudit média filtrant (10) depuis le flasque proximal (20) jusqu'au flasque distal (30), ledit support intermédiaire (50) formant un support pour la membrane hydrophobe (40).

3. Elément filtrant (1) selon l'une des revendications 1 ou 2, dans lequel le flasque distal (30) est muni d'une pluralité d'éléments disjoints faisant saillie dudit flasque distal (30), adaptés pour venir en appui contre une surface d'un boitier de filtre tout en permettant un passage de fluide entre lesdits éléments disjoints.

4. Elément filtrant (1) selon l'une des revendications 1 à 3, dans lequel le flasque proximal (20) présente un orifice central définissant un conduit de sortie du liquide filtré.

5. Elément filtrant (1) selon la revendication 4, comprenant en outre un élément d'étanchéité (60) disposé autour dudit orifice central.

6. Elément filtrant (1) selon l'une des revendications 1 à 5, dans lequel le flasque distal (30) présente une forme de disque plein.

7. Filtre comprenant :
- un boitier (8) définissant un volume interne,
- un élément filtrant (1) selon l'une des revendications précédentes,
ledit boitier (8) comprenant une base (82) et un couvercle (83), la base (82) présentant une surface d'appui intermédiaire (84) délimitant un réservoir inférieur, l'élément filtrant étant disposé en appui sur la surface d'appui intermédiaire (84).
